# EUROPEAN PATENT APPLICATION

(11) **EP 1 806 675 A2**
(43) Date of publication of application: **11.07.2007**
(21) Application number: 06255981.0
(22) Date of filing: 22.11.2006
(51) Int. Cl.: G06F 21/02

(54) **Data storing apparatus, IC Card, and data storing method**

(30) Priority: 25.11.2005 JP 2005340470
(71) Applicant: SHARP KABUSHIKI KAISHA, Osaka-shi, Osaka 545-8522 (JP)
(72) Inventor: Iwata, Takuya, Chiba 270-0121 (JP)
(74) Representative: Brown, Kenneth Richard

(57) **Abstract**

When a CPU receives a rewriting invalidate command from a terminal device, it copies a write program and a delete program stored in a flash memory into a DRAM, executes the copied write program and the copied delete program, and rewrites the write program and the delete program into an NOP instruction, a reset instruction, or an undefined instruction. This prevents unauthorized manipulation of data stored in the flash memory.

## Description

### BACKGROUND OF THE PRESENT INVENTION

The present invention relates to a data storing apparatus and an IC card which comprise a non-volatile memory, such as a flash memory or an EEPROM, and are capable of preventing unauthorized manipulation of data stored in the non-volatile memory. The invention also relates to a data storing method for storing data in the data storing apparatus or the IC card.

In recent years, IC cards comprising in a card type thin housing a non-volatile memory such as a flash memory or an EEPROM, and a CPU for performing operations such as reading, writing and deleting data on the non-volatile memory are popularized. The IC cards are classified into contact-type IC cards having on a surface of the housing a terminal section to be connected to other device to transmit and receive data; non-contact-type IC cards which have an antenna section in the housing and transmit and receive data without wires; and composite-type IC cards having both of these functions. The IC cards are also classified into a rewritable type which allows a user to rewrite data when using the IC card; and a read-only type which includes data written in an internal memory and does not allow rewriting of the data therein after shipment.

Compared to conventionally used magnetic cards, IC cards have merit, such as, for example, it is possible to realize non-contact-type cards, and it is possible to store a larger amount of data. However, since many pieces of highly confidential personal information are often stored in the internal memory, it is essential for the IC cards to have a security function capable of preventing unauthorized data reading, unauthorized data writing, etc. Since the IC card includes a CPU therein, it can perform sophisticated authentication or encryption processes when transmitting or receiving data to/from other devices, and security is enhanced by these processes.

Japanese Patent Application Laid-Open No. 05-40864 (1993) proposes an IC card which can prevent unauthorized manipulation of data in the IC card by storing an issuer PIN (Personal Identification Number) for identifying the issuer of the IC card and a manufacturer PIN for identifying the manufacturer of the IC card in a memory of the IC card and by allowing rewriting of data only when the issuer PIN and manufacturer PIN match by the verification of the PINs.

### BRIEF SUMMARY OF THE INVENTION

The IC card disclosed in Japanese Patent Application Laid-Open No. 05-40864 (1993) uses two types of PINs for authentication. However, if the two types of PINs are known by someone else, there is a possibility that data may be manipulated without authorization. Moreover, there is often the case where a program for rewriting data is stored in the internal memory, and the CPU rewrites the data stored in the memory by reading and executing this program. Therefore, when the value of a program counter possessed by the CPU for storing the memory address of the program being executed is rewritten from outside without authorization, even if the PINs for authentication are unknown, there is a possibility that the program for rewriting data may be executed, and the data may be manipulated without authorization.

The present invention has been made with the aim of solving the above problems, and it is an object of the invention to provide a data storing apparatus which copies a data manipulation instruction sequence for rewriting data stored in non-volatile storing means into volatile data storing means, reads and executes the data manipulation instruction sequence stored in the volatile data storing means, and rewrites and invalidates the data manipulation instruction sequence stored in the non-volatile data storing means, and is thereby capable of certainly preventing unauthorized data manipulation even when its PIN is known by someone else, or the program counter of the CPU is rewritten without authorization.

Another object of the invention is to provide a data storing apparatus which is capable of accepting a command to invalidate a data manipulation instruction sequence for rewriting data, performs invalidation when the invalidate command is accepted, and is thereby capable of producing a condition in which rewriting of data is infeasible by giving an invalidate command after storing necessary data in the non-volatile data storing means.

Still another object of the invention is to provide a data storing apparatus which invalidates a data manipulation instruction sequence including a data write instruction by rewriting it, and is thereby capable of producing a condition in which writing data to the non-volatile data storing means is infeasible.

Yet another object of the invention is to provide a data storing apparatus which invalidates a data manipulation instruction sequence including a data delete instruction by rewriting it, and is thereby capable of producing a condition in which writing data is infeasible by invalidating the data delete instruction because, if the data storing apparatus is a flash memory, for example, writing of data is feasible only after deletion of data.

A further object of the invention is to provide a data storing apparatus which invalidates a data manipulation instruction sequence stored in the non-volatile data storing means by changing it into a process initialize instruction, a no-operation instruction, or an undefined instruction, and is thereby capable of certainly preventing unauthorized data manipulation because data rewriting is infeasible after invalidation, and capable of eliminating a possibility of erroneous operations or abnormal processing even when the program counter of the CPU is rewritten.

A further object of the invention is to provide a data storing apparatus which determines whether or not the data manipulation instruction sequence stored in the non-volatile data storing means has already been invalidated, and does not perform invalidation if it has already been invalidated, and is thereby capable of eliminating a possibility that the invalidation process, which may take time for processing, may be executed repeatedly by mistake.

A further object of the invention is to provide an IC card which, when a command to invalidate a data manipulation instruction sequence for rewriting data is accepted, copies the data manipulation instruction sequence for rewriting data stored in non-volatile storing means into volatile data storing means, reads and executes the data manipulation instruction sequence stored in the volatile data storing means, and rewrites and invalidates the data manipulation instruction sequence stored in the non-volatile data storing means, and is thereby capable of certainly preventing unauthorized data manipulation even when its PIN is known by someone else, or the program counter of the CPU is rewritten without authorization.

A further object of the invention is to provide a data storing method which, when storing data in the above-described data storing apparatus or IC card, stores identification data in the data storing apparatus or the IC card, stores the data in the non-volatile data storing means only when the identification data and identification data from other device are compared with each other and match, and rewrites and invalidates the data manipulation instruction sequence after the storing of data is completed, and is thereby capable of bringing the data storing apparatus or the IC card into a condition in which rewriting of data stored in the non-volatile data storing means is infeasible, and capable of preventing unauthorized data manipulation.

A data storing apparatus according to the present invention is a data storing apparatus including a non-volatile data storing section storing a data manipulation instruction sequence for manipulating data, and a processing section for executing the data manipulation instruction sequence and manipulating data with respect to the non-volatile data storing section, and characterized by comprising: a volatile data storing section; a copying section for reading the data manipulation instruction sequence from the non-volatile data storing section and copying the data manipulation instruction sequence into the volatile data storing section; and an invalidating section for executing the copied data manipulation instruction sequence in the volatile data storing section and manipulating and invalidating the data manipulation instruction sequence stored in the non-volatile data storing section.

In this invention, a data manipulation instruction sequence, or a so-called data rewrite program stored in the non-volatile data storing section, for example, a non-volatile memory such as a flash memory or an EEPROM, is copied into the volatile data storing section, for example, a volatile memory such as an SRAM or a DRAM, the CPU reads and executes the copied data rewrite program in the volatile memory, and rewrites and invalidates the data rewrite program stored in the non-volatile memory. Thereafter, when the supply of electric power to the data storing apparatus is stopped, the data rewrite program stored in the volatile memory is lost, and consequently no data rewrite program exists in the data storing apparatus, and rewriting of the data stored in the non-volatile memory becomes infeasible. Therefore, even when the PIN is known by someone else or the program counter of the CPU is rewritten without authorization after the shipment of the data storing apparatus, it is possible to certainly prevent unauthorized data manipulation. It is thus possible to easily prevent unauthorized data manipulation without adding new hardware for preventing unauthorized data manipulation, and the user can use the data storing apparatus without any worry.

A data storing apparatus according to the present invention further comprises an accepting section for accepting a command to invalidate the data manipulation instruction sequence stored in the non-volatile data storing section, and is characterized in that, when the accepting section accepts the command, the copying section copies the data manipulation instruction sequence, and the invalidating section invalidates the data manipulation instruction sequence.

In this invention, the data rewrite program is invalidated by the above-mentioned method when a command to invalidate the data rewrite program, or a so-called invalidate command, is received. By giving an invalidate command after storing necessary data to the data storing apparatus, the manufacturer or the issuer of the data storing apparatus can prevent the data from being rewritten thereafter. Hence, it is possible to certainly store necessary data, and it is possible to certainly prevent unauthorized data manipulation. It is thus possible to easily prevent unauthorized data manipulation without adding new hardware for preventing unauthorized data manipulation, and the user can use the data storing apparatus without any worry.

The data storing apparatus according to the present invention is characterized in that the data manipulation instruction sequence includes a data write instruction with respect to the non-volatile data storing section.

In this invention, a program including a data write instruction with respect to the non-volatile memory is invalidated as the data rewrite program. Consequently, writing of data with respect to the non-volatile memory is infeasible, and therefore it is possible to certainly prevent unauthorized data manipulation.

The data storing apparatus according to the present invention is characterized in that the data manipulation instruction sequence includes a data delete instruction with respect to the non-volatile data storing section.

In this invention, a program including a data delete instruction with respect to the non-volatile memory is invalidated as the data rewrite program. If the non-volatile memory is a flash memory, data writing is feasible only after the deletion of data. Thus, with the invalidation of the delete instruction, data deletion and data writing with respect of the flash memory become infeasible, and consequently it is possible to certainly prevent unauthorized data manipulation.

A data storing apparatus according to the present invention is characterized in that the invalidating section changes the data manipulation instruction sequence stored in the non-volatile data storing section into an initialize instruction for initializing a process of the processing section, a no-operation instruction for causing the processing section to perform no operation, or an instruction undefined with respect to the processing section.

In this invention, the data rewrite program stored in the non-volatile memory is rewritten into an initialize instruction (so-called reset instruction) for the CPU, a no-operation instruction (so-called NOP instruction) for the CPU, or an undefined instruction for the CPU. Even when the program counter of the CPU is rewritten without authorization, other process such as reading of data or authentication of identification data (PIN) will never be performed. Moreover, since rewriting of data is infeasible after invalidation, even if the PIN is known by someone else, or the program counter of the CPU is rewritten without authorization, it is possible to certainly prevent unauthorized data manipulation. Consequently, the user can use the data storing apparatus without any worry.

A data storing apparatus according to the present invention further comprises a determining section for determining whether or not the data manipulation instruction sequence stored in the non-volatile data storing section has been invalidated by the invalidating section, and is characterized in that, when the determining section determines that the data manipulation instruction sequence has been invalidated, invalidation of the data manipulation instruction sequence by the invalidating section is not performed.

In this invention, when the data rewrite program stored in the non-volatile memory is invalidated, even if a command to perform invalidation is accepted thereafter, the invalidation process is not performed. The invalidation process must rewrite the non-volatile memory, and it takes time to rewrite it. Therefore, by not performing the invalidation again if it has already been performed, it is possible to eliminate unnecessary processing time. Further, since there is no possibility that the invalidation process, which may require time for processing, may be repeated by mistake, the processing time for data writing and invalidation process performed by the manufacturer or the issuer will not be increased by erroneous operations.

An IC card according to the present invention is an IC card including a non-volatile data storing section storing a data manipulation instruction sequence for manipulating data; a processing section for executing the data manipulation instruction sequence and manipulating data with respect to the non-volatile data storing section; and a receiving section for receiving data transmitted from other device, and characterized by comprising: an accepting section for accepting a command to invalidate the data manipulation instruction sequence stored in the non-volatile data storing section through the receiving section; a volatile data storing section; a copying section for reading the data manipulation instruction sequence from the non-volatile data storing section and copying the data manipulation instruction sequence into the volatile data storing section when the accepting section accepts the command; and an invalidating section for executing the copied data manipulation instruction sequence in the volatile data storing section and manipulating and invalidating the data manipulation instruction sequence stored in the non-volatile data storing section.

In this invention, a command to invalidate the data rewrite program given from an external device in a contact or non-contact manner is accepted, the data rewrite program stored in the non-volatile memory is copied into the volatile memory, the copied data rewrite program is executed to rewrite and invalidate the data rewrite program stored in the non-volatile memory. Thereafter, if the supply of electric power to the IC card is stopped, the data rewrite program stored in the volatile memory is lost, and therefore no data rewrite program exists in the IC card, and rewriting of data stored in the non-volatile memory becomes infeasible. Hence, even when the PIN is known by someone else or the program counter of the CPU is rewritten without authorization after the shipment of the IC card, it is possible to certainly prevent unauthorized data manipulation. It is thus possible to easily prevent unauthorized data manipulation without adding new hardware for preventing unauthorized data manipulation, and the user can use the IC card without any worry.

A data storing method according to the present invention is a data storing method for storing data in the non-volatile data storing section of any one of the above-mentioned data storing apparatuses or the IC card, and comprises the steps of storing identification data in the non-volatile data storing section; performing verification with respect to the identification data stored in the non-volatile data storing section and storing data in the non-volatile data storing section; and causing the invalidating section to invalidate the data manipulation instruction sequence stored in the non-volatile data storing section after finishing to store the data in the step.

In this invention, after the manufacturer or the issuer of the data storing apparatus or the IC card verifies the PIN and stores data in the non-volatile memory of the data storing apparatus or the IC card, he or she gives a command to invalidate the data rewrite program and disables rewriting of the data stored in the non-volatile memory. Even when the PIN is known by someone else after the shipment of the data storing apparatus or the IC card, manipulation of data is infeasible. It is thus possible to easily prevent unauthorized data manipulation without adding new hardware for preventing unauthorized data manipulation, and the manufacturer or the issuer can ship safer data storing apparatuses or IC cards.

The above and further objects and features of the invention will more fully be apparent from the following detailed description with accompanying drawings.

### BRIEF DESCRIPTION OF THE SEVERAL VIEWS OF THE DRAWINGS

FIG. 1 is a block diagram showing the structure of a data rewriting system of an IC card of the present invention;
FIG. 2 is a flowchart showing the processing steps of an invalidation process for a write program and a delete program performed by the CPU of the IC card of the present invention;
FIG. 3 is a flowchart showing the processing steps of a sub-routine of the invalidation process executed in steps S8 and S11 of FIG. 2; and
FIG. 4 is a flowchart showing the processes performed in a manufacturing process of storing data in the IC card of the present invention.

### DETAILED DESCRIPTION OF THE INVENTION

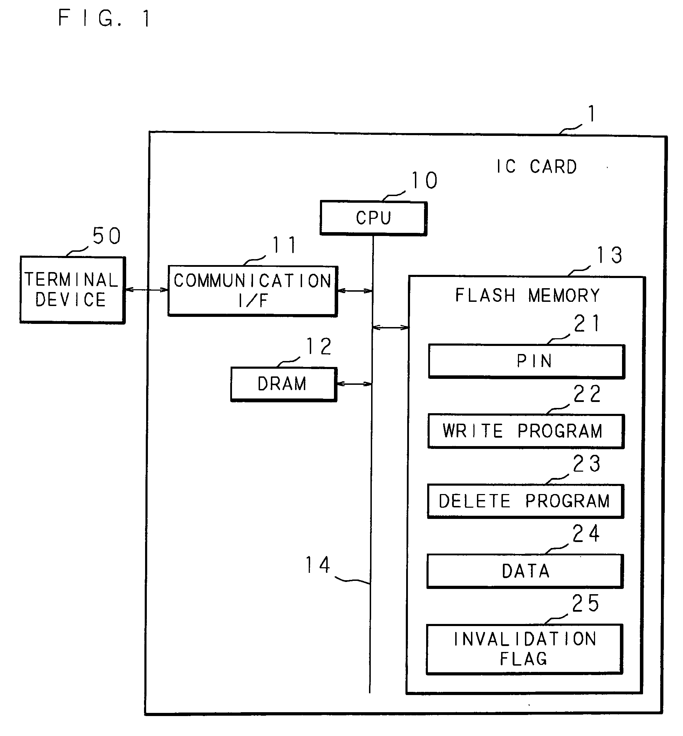

The following description will specifically explain the present invention, based on the drawings illustrating an embodiment thereof. FIG. 1 is a block diagram showing the structure of a data rewriting system of an IC card of the present invention. In FIG. 1, 1 indicates an IC card, and data stored therein is rewritten according to a data rewrite instruction given from a terminal device 50. The IC card 1 comprises a CPU 10, a communication I/F (interface) 11, a DRAM 12, and a flash memory 13 which are connected through a bus 14 to mutually exchange data.

The communication I/F 11 of the IC card 1 performs communications with the terminal device 50. For example, if the IC card 1 is a contact-type IC card, the communication I/F 11 has an exposed connection terminal on the surface of a housing of the card-like IC card, and performs communications with the terminal device 50 through the connection terminal. If the IC card 1 is a non-contact-type IC card, the communication I/F 11 has an antenna for receiving radio signals transmitted from the terminal device 50, and a circuit for demodulating the received radio signals, and performs communications with the terminal device 50 through the radio signals. Moreover, electric power is supplied from the terminal device 50 to the IC card 1 through the communication I/F 11.

When a data read instruction, a data rewrite instruction, etc. are given from the terminal device 50 to the communication I/F 11 of the IC card 1, the instructions are supplied from the communication I/F 11 to the CPU 10. Moreover, when a data rewrite instruction is given, data for rewriting is supplied from the communication I/F 11 to the DRAM 12, and temporarily stored in the DRAM 12. When the CPU 10 is supplied with a data read instruction, it reads data from the flash memory 13 and supplies the data to the communication I/F 11, and the terminal device 50 reads the data in the flash memory 13 through the communication I/F 11. Further, when a data rewrite instruction is given, the CPU 10 writes the data stored temporarily in the DRAM 12 into the flash memory 13. The DRAM 12 as a volatile memory element is used as a temporary storage area for data to be stored in the flash memory 13, or a work area for arithmetic operations of the CPU 10, and the stored data is lost when the supply of electric power to the IC card 1 is stopped.

The flash memory 13 stores, in advance, programs such as a write program 22 and a delete program 23 for operating the CPU 10. When rewriting the data in the flash memory 13, the CPU 10 reads and executes the delete program 23 to delete an area where data rewriting is to be performed, and then reads and executes the write program 22 to write data.

Additionally, the flash memory 13 stores a PIN 21 for preventing unauthorized data reading or unauthorized data rewriting with respect to the IC card 1. When performing data reading or data rewriting with respect to the IC card 1, it is necessary to perform verification of PIN 21 beforehand. The verification of PIN 21 is performed according to a verify instruction given from the terminal device 50 to the IC card 1. A determination is made as to whether or not a PIN given from the terminal device 50 together with the verify instruction matches the PIN 21 stored in the flash memory 13. Only when these PINs match, the CPU 10 accepts a data read instruction, a data rewrite instruction, etc. with respect to the flash memory 13. A program (illustration is omitted) to be used by the CPU 10 for the verification process is also stored in the flash memory 13 in advance. By reading and executing this program, the CPU 10 can perform the verification process. Writing the PIN 21 into the flash memory 13 is executable by the write program 22 and the delete program 23. Programs for operating the CPU 10, such as the write program 22, delete program 23 and program for performing PIN verification, are written in advance by using a test mode, etc. of the IC card 1 in the process of manufacturing the IC card 1.

In addition, stored in the flash memory 13 are data 24 written according to an instruction from the terminal device 50, an invalidation flag 25, etc. Since the data 24 contains highly confidential personal information, the IC card 1 of the present invention is provided with a function to disable the execution of the write program 22 and the delete program 23 stored in the flash memory 13 by invalidating these programs as the function of preventing unauthorized rewriting of data stored in the flash memory 13. This invalidation process is carried out by writing a reset instruction, NOP instruction, undefined instruction, or the like for the CPU 10 over an area of the flash memory 13 where the write program 22 and delete program 23 are written. The reset instruction, NOP instruction, undefined instruction, etc. for overwriting are also stored in the flash memory 13 in advance.

The invalidation flag 25 is a flag indicating whether or not the write program 22 and the delete program 23 have been invalidated by the invalidation process. For example, its value is set to "0" when the invalidation process has not been performed, and its value is set to "1" after performing the invalidation process. Even when a command to perform invalidation is received from the terminal device 50, if the invalidation flag 25 is set to "1", the CPU 10 does not perform the invalidation process because the invalidation process was already performed. Note that the invalidation process is performed in the final stage of the process of manufacturing the IC card 1, and the IC card 1 is used as a read-only card after shipment.

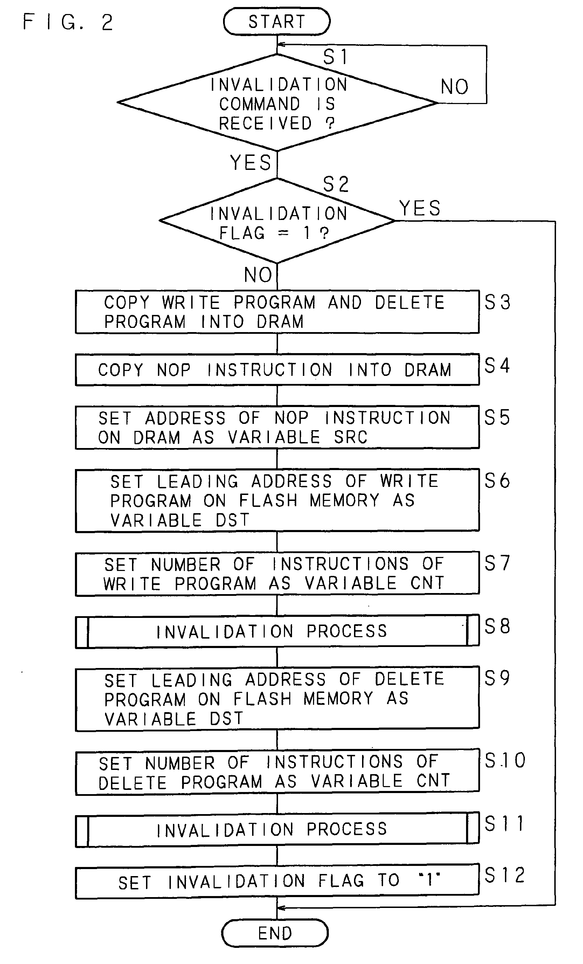

FIG. 2 is a flowchart showing the processing steps of the invalidation process for the write program 22 and the delete program 23 performed by the CPU 10 of the IC card 1 of the present invention. Note that variables SRC, DST, and CNT used in this process are realized using the DRAM 12.

The CPU 10 checks whether or not a command to perform the invalidation process has been received from the terminal device 50 through the communication I/F 11 (step S1). If not received (S1: NO), the CPU 10 waits until the command is received. When a command to perform the invalidation process has been received (S1: YES), the CPU 10 checks whether or not the value of the invalidation flag 25 is set to "1" (step S2). If the invalidation flag 25 is set to "1" (S2: YES), the invalidation process is finished.

If the value of the invalidation flag 25 is not set to "1", that is, if the value of the invalidation flag is set to "0" (S2: NO), the CPU 10 reads the write program 22 and the delete program 23 from the flash memory 13 and copies them into the DRAM 12 (step S3). Next, the NOP instruction is read from the flash memory 13 and copied into the DRAM 12 (step S4). According to this flowchart, although the NOP instruction is copied into the DRAM 12 in step S4, it may be possible to copy the reset instruction or the undefined instruction for the CPU 10.

Next, the memory address of the copied NOP instruction on the DRAM 12 is set as the variable SRC (step S5), and the leading address of the write program 22 on the flash memory 13 is set as the variable DST (step S6). Further, the number of instructions constituting the write program 22 is set as the variable CNT (step S7). After setting the values of these variables, the invalidation process is carried out by executing a sub-routine for performing the invalidation process (step S8).

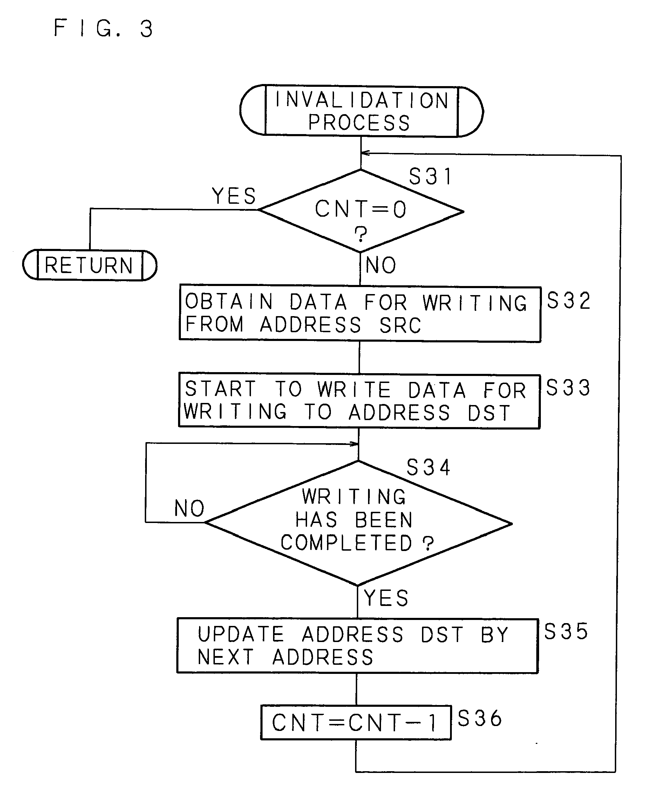

FIG. 3 is a flowchart showing the processing steps of the sub-routine of the invalidation process executed in steps S8 and S11 of FIG. 2. The CPU 10 checks whether or not the value of the variable CNT is "0" (step S31). If the value of the variable CNT is not "0" (S31: NO), the CPU 10 obtains data for writing from the address set as the variable SRC (step S32). Note that since the address of the NOP instruction on the DRAM 12 is set as the variable SRC in steps S4 and S5 of FIG. 2, the data for writing is the NOP instruction.

After obtaining the data for writing, the CPU 10 starts to write the obtained data for writing to the address set as the variable DST on the flash memory 13 (step S33). At this time, the CPU 10 writes the data into the flash memory 13 by reading and executing the write program 22 and the delete program 23 copied into the DRAM 12. Note that writing into the flash memory 13 is executable after deletion of data. Therefore, actually, if the address where writing is to be performed has not been deleted, the delete program 23 is executed to delete the data before writing, and writing is performed after the deletion of data. Moreover, data deletion with respect to the flash memory 13 can not be performed on an address-by-address basis, but needs to be performed on the basis of a deletion area of a plurality of addresses. Therefore, if other data that does not need to be rewritten exists in a deletion area to be deleted, it is necessary to copy and temporarily withdraw the other data in the DRAM 12, and write the withdrawn data after the delete operation. Illustration of these processes is omitted in FIG. 3.

After data writing was started in step S33, the CPU 10 checks whether or not writing has been completed (S34). If writing has not been completed (S34: NO), the CPU 10 waits until writing is completed. If writing has been completed (S34: YES), the CPU 10 updates the address set as the variable DST by the next address (step S35). If the write program 22 and the delete program 23 are stored in the flash memory 13 without being divided, the address is updated by just incrementing the variable DST. Next, the CPU 10 subtracts only 1 from the value of the variable CNT (step S36), and the procedure is returned to step 531.

The above-mentioned process is repeated until the value of the variable CNT becomes "0", and, when the value of the CNT is "0" in step S31 (S31: YES), the process of the sub-routine is ended and the procedure is returned to the main routine.

After performing the invalidation process for the write program 22 by executing the sub-routine shown in FIG. 3 in step S8, the leading address of the delete program 23 on the flash memory 13 is set as the variable DST (step S9), and the number of instructions constituting the delete program 23 is set as the variable CNT (step S10). After setting the values of these variables, the CPU 10 executes the sub-routine for performing the invalidation process (see FIG. 3) and carries out the invalidation process for the delete program 23 (step S11). After the invalidation process for the delete program 23 is finished by the completion of the execution of the sub-routine, the value of the invalidation flag 25 is set to "1" (step S12), and the process is finished. Thereafter, when the supply of electric power to the IC card 1 is stopped, the copied write program 22 and the copied delete program 23 in the DRAM 12 are deleted, and thus it is impossible to rewrite the data in the flash memory 13 when electric power is supplied next time.

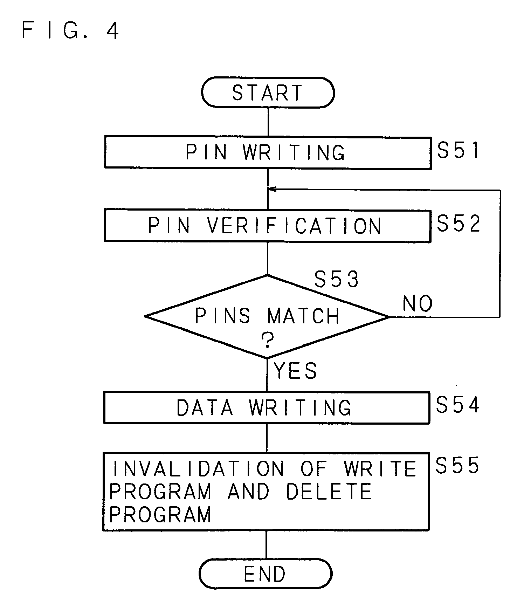

The invalidation process shown in FIG. 2 and FIG. 3 is performed after storing necessary data 24 in the flash memory 13 in the process of manufacturing the IC card 1. Since the IC card 1 does not allow rewriting of the data 24 after the invalidation process, it is used as a read-only IC card. FIG. 4 is a flowchart showing a process performed in the manufacturing step of storing data in the IC card 1 of the present invention, which is a process performed by the terminal device 50. Note that FIG. 4 shows a flow for storing the data 24 from a state in which the write program 22 and the delete program 23 have already been stored in the flash memory 13 of the IC card 1, the PIN 21 is not set, and the data 24 is not stored.

Since the PIN 21 is not set in the flash memory 13 of the IC card 1, first, the PIN 21 is written (step S51). The PIN 21 is written by transmitting a PIN write command to the IC card 1 from the terminal device 50. The CPU 10 of the IC card 1 which receives the PIN write command utilizes the write program 22 and the delete program 23, and performs the process of writing the PIN 21 in a specific area of the flash memory 13.

Next, a PIN verify command is transmitted from the terminal device 50 to the IC card 1 to verify the PIN 21 (step S52). The PIN verify command is given to the IC card 1 together with a PIN for verification, and the CPU 10 of the IC card 1 which receives the PIN verify command reads and compares the PIN 21 stored in the flash memory 13, and transmits to the terminal device 50 a verification result indicating whether or not the PINs match. The terminal device 50 checks whether or not the PINs match, based on the verification result from the IC card 1 (step 53). If the PINs do not match (S53: NO), the procedure is returned to step S52 and verification using a correct PIN is carried out.

If the PINs match as a result of PIN verification (S53: YES), the CPU 10 of the IC card 1 can accept a data write command. Therefore, a write command and data for writing is transmitted to the IC card 1 from the terminal device 50 to perform data writing (step S54). After data writing is finished, an invalidate command is transmitted from the terminal device 50 to the IC card 1, and the invalidation process for the write program 22 and the delete program 23 stored in the flash memory 13 is performed (step S55), and the procedure is ended. Thereafter, the IC card 1 is shipped as a product for use as a read-only IC card by the user.

In the IC card 1 with the above-described structure, after storing necessary data 24 in the flash memory 13, the write program 22 and the delete program 23 for rewriting the flash memory 13 can be rewritten into an NOP instruction (reset instruction, undefined instruction). Therefore, even if the PIN 21 is known by someone else, or even if the CPU 10 erroneously executes these instructions because of unauthorized rewriting of the program counter, it is possible to prevent unauthorized manipulation of the data 24.

In this embodiment, although the IC card 1 comprises the flash memory 13 as a non-volatile memory, the non-volatile memory is not limited to this, and may be other non-volatile memory such as, for example, an EPROM, or may be a hard disk instead of memory. Moreover, although the IC card 1 comprises the DRAM 12 as a volatile memory, the volatile memory is not limited to this, and may be other volatile memory such as, for example, an SRAM. Further, although the structure of rewriting all the write program 22 and the delete program 23 in the flash memory 13 is illustrated, the present invention is not limited to this, and it may be possible to adopt a structure for disabling the execution of the programs by rewriting only a part of the programs. It may also be possible to rewrite not only the write program 22 and the delete program 23, but also other program, or it may be possible to rewrite only one of the write program 22 and the delete program 23. Further, although the structure where the write program 22 and the delete program 23 are rewritten into the NOP instruction, reset instruction, or undefined instruction is illustrated, the present invention is not limited to this, and it may be possible to rewrite these programs into other instructions.

The above-described embodiment illustrates the structure in which the value of the invalidation flag 25 is set to "0" when the invalidation process has not been performed, and the value is set to "1" when the invalidation process has been performed. However, the present invention is not limited to this, and it may be possible to adopt an opposite structure in which the value of the invalidation flag 25 is set to "1" when the invalidation process has not been performed, and the value is set to "0" when the invalidation process has been performed. In a non-volatile memory such as a flash memory or an EEPROM, all the bits in the memory are often set to "1" as the initial value after manufacture. In such a non-volatile memory, it is suitable to set the value to "0" when the invalidation process is performed. If there is no need to provide the invalidation flag 25, the present invention may be constructed without using the invalidation flag 25.

Moreover, although the above-described embodiment illustrates the structure where the main routine shown in FIG. 2 calls the process shown in FIG. 3 and executes it as a sub-routine. However, the present invention is not limited to this, and it may be possible to incorporate the process shown in FIG. 3 into the main routine. Although the above-described embodiment illustrates the structure where the variables SRC, DST, and CNT to be used for processing are realized using the DRAM 12, the present invention is not limited to this, and it may be possible to realize these variables as registers in the CPU 10. Further, although this embodiment explains the IC card 1 as an example of the data storing apparatus, the present invention is not limited to this and may be other data storing apparatus such as, for example, an IC tag.

## Claims

1. A data storing apparatus comprising non-volatile data storing means (13) for storing a data manipulation instruction sequence for manipulating data; and processing means (10) for executing the data manipulation instruction sequence and manipulating data with respect to said non-volatile data storing means (13), **characterized by** comprising:
volatile data storing means (12);
copying means (10, S3) for reading the data manipulation instruction sequence from said non-volatile data storing means (13) and copying the data manipulation instruction sequence into said volatile data storing means (12); and
invalidating means (10, S8, S11) for executing the copied data manipulation instruction sequence in said volatile data storing means (12) and invalidating the data manipulation instruction sequence stored in said non-volatile data storing means (13).

2. The data storing apparatus according to claim 1, further comprising accepting means (10, S1) for accepting a command to invalidate the data manipulation instruction sequence stored in said non-volatile data storing means (13),
wherein, when said accepting means (10, S1) accepts the command, said copying means (10, S3) copies the data manipulation instruction sequence, and said invalidating means (10, S8, S11) invalidates the data manipulation instruction sequence.

3. The data storing apparatus according to claim 1 or 2, wherein
the data manipulation instruction sequence includes a data write instruction with respect to said non-volatile data storing means (13).

4. The data storing apparatus according to any one of claims 1 through 3, wherein
the data manipulation instruction sequence includes a data delete instruction with respect to said non-volatile data storing means (13).

5. The data storing apparatus according to any one of claims 1 through 4, wherein
said invalidating means (10, S8, S11) changes the data manipulation instruction sequence stored in said non-volatile data storing means (13) into an initialize instruction for initializing a process of said processing means (10), a no-operation instruction for causing said processing means (10) to perform no operation, or an instruction undefined with respect to said processing means (10).

6. The data storing apparatus according to any one of claims 1 through 5, further comprising determining means (10, S2) for determining whether or not the data manipulation instruction sequence stored in said non-volatile data storing means (13) has been invalidated by said invalidating means (10, S8, S11),
wherein, when said determining means (10, S2) determines that the data manipulation instruction sequence has been invalidated, invalidation of the data manipulation instruction sequence by said invalidating means (10, S8, S11) is not performed.

7. An IC card comprising non-volatile data storing means (13) for storing a data manipulation instruction sequence for manipulating data; processing means (10) for executing the data manipulation instruction sequence and manipulating data with respect to said non-volatile data storing means (13); and receiving means (11) for receiving data transmitted from other device (50), **characterized by** comprising:
accepting means (10, S1) for accepting a command to invalidate the data manipulation instruction sequence stored in said non-volatile data storing means (13) through said receiving means (11);
volatile data storing means (12);
copying means (10, S3) for reading the data manipulation instruction sequence from said non-volatile data storing means (13) and copying the data manipulation instruction sequence into said volatile data storing means (12) when said accepting means (10, S1) accepts the command; and
invalidating means (10, S8, S11) for executing the copied data manipulation instruction sequence in said volatile data storing means (12) and invalidating the data manipulation instruction sequence stored in said non-volatile data storing means (13).

8. A data storing method for storing data in the non-volatile data storing means (13) provided in the data storing apparatus of any one of claims 1 through 6, or in the IC card of claim 7, **characterized by** comprising:
a step (S51) of storing identification data in the non-volatile data storing means (13);
a step (S52, S53, S54) of performing verification with respect to the identification data stored in the non-volatile data storing means (13) and storing data in the non-volatile data storing means (13); and
a step (55) of causing the invalidating means (10, S8, S11) to invalidate the data manipulation instruction sequence stored in the non-volatile data storing means (13) after finishing to store the data in said step.
